# EUROPÄISCHE PATENTSCHRIFT

(11) **EP 0 800 024 B1**
(45) Veröffentlichungstag und Bekanntmachung des Hinweises auf die Patenterteilung: **18.04.2001**
(21) Anmeldenummer: 96120529.1
(22) Anmeldetag: 19.12.1996
(51) Int. Cl.: F16H 61/26, F16H 59/02

(54) **Vibrationsgedämpfte Schaltstange für eine Getriebeschaltvorrichtung für Fahrzeuge**
Vibration damping gearshift selector linkage for vehicles
Tringlerie de sélection de vitesses pour l'amortissement de vibrations

(30) Priorität: 06.04.1996 DE 19613900
(43) Veröffentlichungstag der Anmeldung: 08.10.1997
(73) Patentinhaber: Bayerische Motoren Werke Aktiengesellschaft, 80788 München (DE)
(72) Erfinder: Weinhart, Armin, 85560 Ebersberg (DE); Rastinger, Bernhard, 81249 München (DE)

(56) Entgegenhaltungen:
- DE-A- 4 415 921
- DE-C- 4 334 166

## Beschreibung

Die Erfindung betrifft eine Schaltstange für eine Getriebeschaltvorrichtung für Fahrzeuge nach dem Oberbegriff des Hauptanspruchs.

Die DE 44 15 921 A1 offenbart bereits eine Getriebeschaltvorrichtung für Fahrzeuge, bei der motorerregte Schwingungen, die Vibrationen des Schalthebels verursachen, durch eine geteilte Schaltstange gedämpft werden. Die geteilte Schaltstange besteht aus zwei Stangenabschnitten, welche über ein Drehbewegung ermöglichendes Gelenk miteinander verbunden sind. Das Gelenk ist als Drehgelenk mit einer senkrecht zur Achsrichtung der Schaltstange verlaufenden Drehachse ausgebildet. Um ein Ausknicken der Schaltstange zu verhindern, sind die beiden Stangenabschnitte zusätzlich über ein spielbehaftetes Stützlager miteinander verbunden, dessen Lagerachse parallel zur Drehachse des Drehgelenks verläuft.

Durch die beschriebene Getriebeschaltvorrichtung werden von außen aufgebrachte Schwingungen gedämpft, während Wirkungskräfte im Schaltmechanismus des Getriebes immer noch bis in den Schalthebel des Getriebes geleitet werden und vom Fahrer spürbar sind. Sie wirken sich störend aus und führen zu einem subjektiv ungenauen und unkomfortablen Schaltgefühl.

Deshalb ist es Aufgabe der Erfindung, eine vibrationsgedämpfte Getriebeschaltvorrichtung zu schaffen, bei der Betätigungskräfte in Schaltrichtung, die aus der Schaltbetätigung resultieren, durch den Aufbau der Getriebeschaltvorrichtung definiert beeinflußt werden können.

Die Aufgabe wird erfindungsgemäß mit den kennzeichnenden Merkmalen des Anspruchs gelöst. Weitere Ausgestaltungen der Erfindung ergeben sich aus den Unteransprüchen.

Nach der Erfindung sind wenigstens zwei Schaltstangenabschnitte einer Schaltstange für eine Getriebeschaltvorrichtung für Fahrzeuge durch ein Drehgelenk und ein dazu parallel liegendes spielbehaftetes Stützlager miteinander verbunden, wobei die gedachten Verbindungslinien zwischen Drehgelenk und den Ankoppelpunkten am freien Ende jedes Schaltstangeabschnittes ein Dreieck bilden. Das hat den Vorteil, daß das am Schalthebel auftretende Schaltgefühl verbessert wird, da das elastische Element am spielbehafteten Stützlager jetzt beim Einlegen und beim Auslegen der Gänge wirksam wird. Aufgrund der Position des Drehgelenks, außermittig zur beaufschlagten Kraftrichtung, wird ein gewolltes, geringfügiges und elastisches Ausknicken der Stange erzielt. Eine weitere definierte Beeinflussung der Betätigungskräfte in Schaltrichtung kann zusätzlich noch durch unterschiedlich gewählte Steifigkeitswerte im Stützlager erreicht werden.

Bei einer vorteilhaften Ausführung der Erfindung liegt die von den Ankoppelpunkten und dem Drehgelenk aufgespannte Dreiecksfläche in einer Fahrzeuglängsebene. Liegen die Schaltrichtung, das heißt die Verbindungslinie zwischen den Ankoppelpunkten, und das Drehgelenk in derselben Vertikalebene, so ergibt sich eine besonders wirkungsvolle Qualitätsverbesserung des Schaltgefühls.

Bei einer bevorzugten Ausführung der Erfindung ist jeweils ein Ankoppelpunkt der Schaltstange mit der Schaltwelle bzw. dem Schalthebel verbunden. Das hat den Vorteil, daß keine weiteren Schaltelemente die Schwingungsdämpfung beeinflussen.

Um größtmögliche Bodenfreiheit des Fahrzeugs zu gewährleisten, ist bei einer weiteren vorteilhaften Ausführung der Erfindung die Spitze des Dreiecks in der Fahrzeuglängsebene nach oben gerichtet.

Ein bevorzugtes Ausführungsbeispiel der Erfindung ist in der nachfolgenden Beschreibung und der zugehörigen Zeichnung näher dargestellt. Es zeigen
- Figur 1: eine Getriebschaltvorrichtung umfassend einen Schalthebel, eine Schaltstange und ein angedeutetes Getriebegehäuse in einer Ansicht und
- Figur 2: die Schaltstange nach Figur 1 in der Draufsicht.

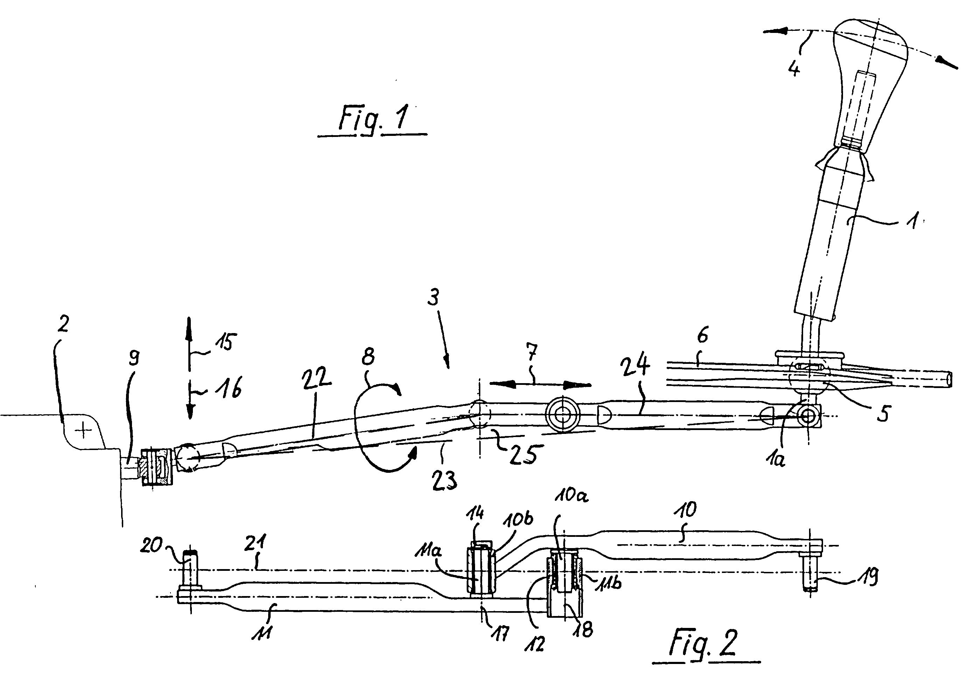

Die erfindungsgemäße Getriebeschaltvorrichtung für ein Fahrzeug besteht aus einem Schalthebel 1, einem Schaltgetriebe 2 und einer zwischen dem Schalthebel 1 und dem Schaltgetriebe 2 liegenden, insgesamt mit 3 bezeichneten Schaltstange. Der Schalthebel 1 läßt sich in Richtung eines Doppelpfeiles 4 in Fahrtrichtung nach vorne und nach hinten bewegen. Desweiteren kann er senkrecht dazu betätigt werden, was allerdings in der Figur 1 nicht dargestellt ist. Ermöglicht wird diese Beweglichkeit des Schalthebels 1 durch eine Kugellagerung 5 in dem Bodenabschnitt 6 einer nicht näher dargestellten Fahrzeugkarosserie.

Ein unteres Ende 1a des Schalthebels 1 ist gelenkig mit der Schaltstange 3 verbunden, so daß die Schaltstange 3 die Bewegungen des Schalthebels 1 mitmacht, das heißt, daß sie sich axial verschieben und um ihre Achse verdrehen läßt. Die axialen Bewegungen sind in Figur 1 durch einen Doppelpfeil 7, die Verdrehbarkeit durch einen Doppelpfeil 8 dargestellt.

Das dem Schalthebel 1 gegenüberliegende Ende der Schaltstange 3 ist wiederum gelenkig mit einem Schaltglied 9 verbunden, das in das Innere des Getriebes führt und im wesentlichen die nicht weiter dargestellten Schaltgabeln betätigt und damit das Einlegen der Gänge bewirkt.

Der Aufbau der Schaltstange 3 ist in Figur 2 näher dargestellt. Sie besteht aus zwei Stangenabschnitten 10 und 11, die mit ihren einen Enden miteinander verbunden sind, während die anderen Enden Zapfen 19 und 20 aufweisen für den jeweiligen gelenkigen Anschluß des Schalthebelendes 1a bzw. des Schaltgliedes 9.

Desweiteren ist an jedem Stangenabschnitt 10, 11 eine Hülse und ein Bolzen befestigt, und zwar im Bereich des Endes, das mit dem anderen Stangenabschnitt in Verbindung steht. Dabei sind in Axialrichtung am äußeren Ende die Hülsen und mit Abstand hierzu die Bolzen angeordnet. Beide Teile, also Bolzen und Hülsen stehen zur Stangenachse radial ab und zeigen in die gleiche Richtung. Ihre Längsachsen verlaufen somit parallel zueinander. Im Fall des Stangenabschnitts 10 ist die am äußeren Ende sich befindliche Hülse mit der Kennziffer 10b belegt, während der Bolzen die Bezugsziffer 10a trägt. Entsprechend ist bei der Stangenhälfte 11 der Bolzen mit 11a bezeichnet und die Hülse mit 11b.

Die Stangenabschnitte 10 und 11 sind zusammengesteckt und ergeben so die Schaltstange. Dabei bilden die Hülse 10b und der Bolzen 11a ein Drehgelenk mit einer senkrecht zur Längsachsen der Stangenabschnitt verlaufenden Drehachse 17. Die Hülse 11b und der Bolzen 10a andererseits bilden zusammen ein Widerlager, dessen Lagerachse 18 ebenfalls senkrecht zu den Schaltstangenachsen und parallel zur Drehgelenkachse 17 verläuft.

Zwischen dem Bolzen 10a und der Hülse 11b ist Spiel vorgesehen. Einen Teil des durch das Spiel sich einstellenden Freiraum füllt eine elastische Schicht aus, die als Lagerelement 12 den Bolzen 10a umgibt. Es sei noch angemerkt, daß die elastische Schicht den Freiraum ganz ausfüllen kann.

Ein Federclips 14, der in eine Ringnut des aus der Hülse 10b heraustretenden Ende des Bolzens 11a aufgeschoben ist, sichert die beiden Stangenhälften 11 und 10 in ihrer montierten Lage.

Der Stangenabschnitt 10 ist an seinem dem Stangenabschnitt 11 zugewandten Ende gekröpft, so daß die eigentlichen Längsachsen der Stangenabschnitte 10, 11 im Abstand zueinander parallel verlaufen. Die Anschlußzapfen 19, 20 für die schalthebel- und getriebeseitige Anlenkung zeigen in entgegengesetzten Richtungen, so daß sich die zusammengesetzte Schaltstange so ins Fahrzeug einbauen läßt, daß ihre gedachte Längsachse 21 sowohl durch die Mitte der schalthebel- und getriebeseitigen Gelenke als auch durch die Mitte des Drehgelenks und des Stützlagers verläuft. Eine Verschränkung der Schaltstange bei ihrer Betätigung wird dadurch vermieden.

Desweiteren ist der Stangenabschnitt 11 im Bereich des Drehgelenks abgewinkelt, so daß das Drehgelenk mit den Anschlußzapfen 19, 20 eine Dreiecksfläche 25 aufspannt, die in einer Fahrzeuglängsebene liegt. Die gedachte Längsachse 21 besteht so aus den gedachten Verbindungslinien 22, 24 zwischen Drehgelenk und je einem Anschlußzapfen 19, 20, die sich in der Spitze des Dreiecks 25 im Drehgelenk treffen. Die Grundseite des Dreiecks 25 bildet die gedachte Verbindungslinie 23 zwischen den Anschlußzapfen 19, 20.

Die Schaltstange, bestehend aus den Schaltstangenabschnitten 10 und 11 ermöglicht es, Schwingungen, wie sie in Figur 1 mit den Pfeilen 15 und 16 dargestellt sind, wirksam zu dämpfen und zu entkoppeln und damit vom Schalthebel 1 fernzuhalten. Durch das Spiel in dem Lagerelement 12 läßt sich der Stangenabschnitt 11 in einem begrenzten Bereich in Richtung der Pfeile 15, 16 gedämpft bewegen. Durch das Drehgelenk 11a, 10b andererseits lassen sich Bewegungen in Richtung des Doppelpfeiles 7 und des Pfeiles 8 ohne Spiel auf das Getriebeeingangsteil 9 übertragen. Bei diesen Bewegungen verhindert das Stützlager 10a, 11b ein Ausknicken der beiden Stangenhälften 10 und 11, während durch die Abwinkelung im Stangenabschnitt 11 die Betätigungskräfte in Schaltrichtung zum Beispiel durch elastische Abfederung beeinflußt werden können.

## Patentansprüche

1. Schaltstange (3) für eine Getriebeschaltvorrichtung für Fahrzeuge, die aus wenigstens zwei Stangenabschnitten (10, 11) besteht, die durch ein Drehgelenk (17) und ein dazu parallel liegendes, spielbehaftetes Stützlager (18) miteinander verbunden sind, um auftretende Schwingungen zu dämpfen, dadurch gekennzeichnet, daß gedachte Verbindungslinien (22, 23, 24) zwischen Drehgelenk (17) und den Anschlußzapfen (19, 20) am freien Ende jedes Stangenabschnitts (10, 11) ein Dreieck (25) bilden.

2. Schaltstange (3) nach Anspruch 1, dadurch gekennzeichnet, daß die Dreiecksfläche des Dreiecks (25) in einer Fahrzeuglängsebene liegt.

3. Schaltstange (3) nach Anspruch 1 oder 2, dadurch gekennzeichnet, daß der eine Stangenabschnitt (10) mit seinem Anschlußzapfen (19) mit einem von Hand betätigbaren Schalthebel (1) verbunden ist und der Anschlußzapfen (20) des anderen Stangenabschnitts (11) an einem Schaltglied (9) eines Schaltgetriebes (2) angebracht ist.

4. Schaltstange (3) nach einem der Ansprüche 1 bis 3, dadurch gekennzeichnet, daß die Spitze des Dreieckes (25), wo sich das Drehgelenk (17) befindet, in der Fahrzeuglängsebene nach oben gerichtet ist.

## Claims

1. A gear shift bar (3) for a gear shift device for vehicles, the bar having at least two portions (10, 11) connected by a swivel joint (17) and a step bearing (18) parallel thereto and with clearance, in order to damp any vibration which occurs, characterised in that imaginary lines (22, 23, 24) connecting the swivel joint (17) to the connecting pins (19, 20) at the free ends of each bar portion (10, 11) form a triangle (25).

2. A gear shift bar (3) according to claim 1, characterised in that the surface of the triangle (25) lies in a longitudinal plane of the vehicle.

3. A gear shift bar (3) according to claim 1 or claim 2, characterised in that the connecting pin (19) of one bar portion (10) is connected to a hand-operated shift lever (1) and the connecting pin (20) of the other bar portion (11) is mounted on a component (9) of a gear-shift mechanism (2).

4. A gear shift bar (3) according to any of claims 1 to 3, characterised in that the apex of the triangle (25) where the swivel joint (17) is situated points upwards in the longitudinal plane of the vehicle.

## Revendications

1. Tringlerie de commande (3) pour un dispositif de changement de vitesse pour véhicules, qui se compose d'au moins deux sections de tige (10, 11), reliées l'une à l'autre par une articulation tournante (17) et par un palier d'appui (18), monté en parallèle à cela, et pourvu de jeu, pour amortir les vibrations qui se produisent,
caractérisée en ce que
des lignes de liaison imaginaires (22, 23, 24) entre l'articulation tournante (17)et les tétons de raccordement (19, 20) à l'extrémité libre de chaque section de tige (10, 11) forment un triangle (25).

2. Tringlerie de commande (3) selon la revendication 1,
caractérisée en ce que
la surface du triangle (25) se trouve dans un plan longitudinal du véhicule.

3. Tringlerie de commande (3) selon la revendication 1 ou 2,
caractérisée en ce que
l'une des sections de tige (10) est reliée par son téton de raccordement (19) à un levier de changement de vitesse (1) qui peut être actionné à la main, et le téton de raccordement (20) de l'autre section de tige (11) est mis sur un organe de commande (9) d'une boîte de vitesse (2).

4. Tringlerie de commande (3) selon la revendication 1 à 3,
caractérisée en ce que
le sommet du triangle (25) est orienté, à l'endroit où se trouve l'articulation tournante (17), vers le haut dans le plan longitudinal du véhicule.
